# EUROPEAN PATENT APPLICATION

(11) **EP 1 211 626 A2**
(43) Date of publication of application: **05.06.2002**
(21) Application number: 01309919.7
(22) Date of filing: 26.11.2001
(51) Int. Cl.: G06F 17/60

(54) **User interactive administration program framework**

(30) Priority: 30.11.2000 CA 2327175
(71) Applicant: International Business Machines Corporation, Armonk, NY 10504 (US)
(72) Inventor: Hildebrand, Dean M., c/o IBM United Kingdom Ltd, Winchester, Hampshire SO21 2JN (GB); Shiner, Jeffrey A., c/o IBM United Kingdom Ltd, Winchester, Hampshire SO21 2JN (GB); Teare, David A., c/o IBM United Kingdom Ltd, Winchester, Hampshire SO21 2JN (GB)
(74) Representative: Moss, Robert Douglas

(57) **Abstract**

The invention provides a program framework for use in a web based environment. The framework is provided in a web browser to bundle associated web pages from a web site into one viewable page. The framework enables the bundle of associated web pages to be returned by a remote machine. User data required by the web pages is identified in a parsable string returned by the browser from the user data source. A client at the remote machine is enabled, through the web browser, to save the user data at the remote machine, update that user data and then return the updated data to the user data source for processing. The client's ability to store the user data associated with the bundle of associated web pages in turn permits the client to return all of the completely modified web pages at one time. The framework also permits the client to return multiple associated web pages from multiple servers and return the modified user data and web pages at one time. The invention also includes a method of implementing a framework that allows associated web pages to be bundled into one viewable page, the user data to be stored at the client's remote machine, and updated data to be returned to the user's data source for processing. The invention also provides a computer product which may be loaded into a computer system to provide a framework in accordance with this invention.

## Description

### Field of the Invention

The invention relates to a method and system for providing a framework to administer user interactive data flow in an electronic commerce environment. The framework works solely in an internet browser environment to enable a web user to access, update and store commercial information relating to remotely served pages.

### Background of the Invention

In a web-based commercial environment, numerous problems arise in administering a data source (including but not limited to a database, file and other data sources) from a remote location. Although prior art systems have provided various ways of administering data sources from remote locations, there are problems associated with the prior art approaches. The main problem typically involves the need for installation of additional software into an existing system to perform the remote administration. Most administrators are not technical personnel and consequently they have difficulties in handing the installation of additional software applications on their machines.

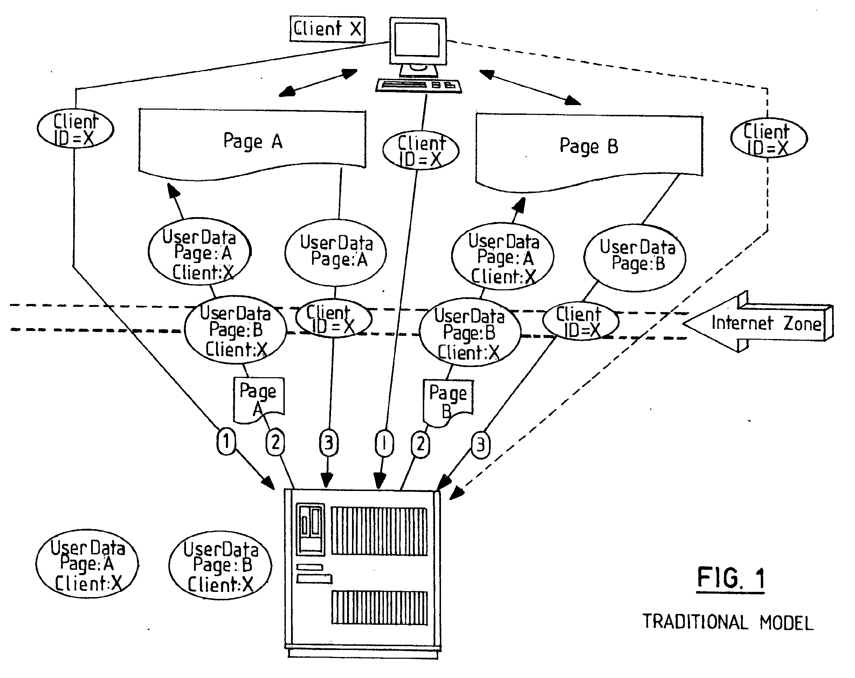

As described in further detail below (in connection with Figure 1), a number of pages are typically stored on a user data source (eg., server). For a web purchaser or visitor (client) to access or request a number of pages (eg., page A or B) from the server for updating purposes, the client must typically proceed through the following 3 steps:
(1) The client must request the page (A or B) from the server and provide client identification so that the server can return the stored user data for that particular client.
(2) The server returns the client specific user data for all associated pages along with serving the requested page.
(3) The client returns the updated user data for that particular page along with the client identification for storage on the server.

The client may continuously update either page A or B (by repeating steps 1 to 3) until the client is ultimately satisfied with the data. At that point, the client will notify the server that the client is finished updating his/her client data and the server will be able to process that (updated) data. It will be apparent that a number of problems were associated with the earlier technology. Among other things, potentially numerous individual page requests from a remote location would require lengthy client - user sessions, and make it difficult for the client to easily retrieve information from pages previously updated by the client in a much earlier part of the client - user session.

By way of related background, one of the common ways for a user to input data is to present or request information in a set of logically associated pages. This approach allows the required data to be broken down into small, manageable pieces. The input data on any individual page is considered incomplete without the data from the associated pages. This presents a problem when requesting information on the WWW (world wide web) since the business logic of a form cannot be maintained over multiple pages.

As noted regarding traditional technology, user information on an individual page is sent back to, and stored on the server. Thus, when a client returns to that page, the information, or state, of that individual page can be remembered. If the business logic on a page requires user data from other logically associated pages, the user data from all pages would have to be returned from the server for that page (with all associated data) to display properly. (An example of this would be the first page requesting a currency in a web-based purchase order, and the second page validating a price input field for the specific currency relating to that purchase transaction.)

This prior approach is cumbersome and inefficient. Since the user is able to navigate the pages freely updating the associated information, the client would need to go back to the server to load the information many times. Furthermore, since the information is associated, the server only processes the data when the input from all associated pages is complete.

In the traditional model, the solution is particularly complex if the associated pages (and related information) are stored on separate servers. With the client specific user data residing on the separate servers, the multiple servers themselves must communicate to provide the total user data to the client machine.

### Summary of the Invention

The invention provides a framework which allows website developers to easily write customized administration programs which the end user (client) can access through a web browser. The framework of the present invention is adaptable and may be configured to allow any data source. The framework also handles all three phases of administration: (1) initialization, (2) the user (administrator) interaction, and (3) the completion and update of the data source.

The framework works in a browser environment. The invention eliminates the need for administrators to install complicated software to administer their data sources.

By way of summary, in one embodiment of the invention, the user data for associated pages A and B are stored on the client machine. For the client (X) to request a page (A or B) for update, the 2 steps are:
(1) The client must request the page from the server; and
(2) The server returns the requested page.
(3) ** Step 3 (noted above in association with prior technology) is not required as the data is saved on the client machine.**

The client may continuously update either page A or B (repeating steps 1 and 2) until satisfied. At that point, the client will send the user data for all pages back to the client for processing.

In web sites or other web-based commercial systems utilizing multiple servers, the present framework allows the user data to be stored on the client's machine. The client is permitted to return the associated pages from the multiple servers. The implementation of the framework in this multiple server environment eliminates the need for the servers to repeatedly communicate (between the servers) during the client-user session.

In one aspect of the invention, a framework is provided for use in a web browser environment. The web browser environment comprises associated web pages in a user data source which is accessible from a remote client location. The framework comprises: means for bundling the associated web pages into one viewable page; means for navigating the associated web pages within the viewable page; means for loading from the data source any data required by the associated web pages; means for enabling access to the viewable page from the remote location; and means for enabling the data required by the associated web pages to be stored at the remote location.

In another aspect of the invention, a method of providing a framework for use in a web browser environment is described. The web browser environment comprises associated web pages in a data source accessible from a machine at a remote location. The method comprises the steps of:
bundling the associated web pages into a single viewable page, the single viewable page being accessible through a single URL request, providing tabs for manipulation of each of the associated web pages, identifying data required by each of the associated web pages in a parsable string,
enabling the machine at the remote location to store the parsable string, and modify the data required by each of the web pages in the parsable string, and storing in the data source modified data received from the machine at the remote location.

In another aspect of the invention, a computer product is disclosed. The product implements the framework in a web browser environment. The computer product comprises recording means. The recording means comprise means for implementing the operation of the framework within the web browser environment. By way of example, the recording means may be a disk, CD-ROM, hard drive or other suitable recording device. Typically, the recording device will be a magnetic recording device capable of storing the other necessary features for implementing the framework. An example of a preferred embodiment of the present invention is described in greater detail below in association with the drawings appended hereto.

It will be appreciated by those skilled in the art that the computer program can be stored in storage or transmitted as a signal, such as a modulated carrier signal for use in a computer system, or on a network such as the Internet for use in a compiler system.

### Brief Description of the Drawings

The present invention will now be described, by way of example only, with reference to preferred embodiments thereof, as illustrated in the following drawings, in which:
**Figure 1** is a schematic representation of prior art technology relating to remote access to a web-server.
**Figure 2** is a schematic representation of one embodiment of the present invention in a web- browser environment.
**Figure 3** is a representation of a data source administration tool relating to one aspect of the present invention.
**Figure 4** is a schematic representation of the initialization of an example of a framework of the present invention.
**Figure 5** is a schematic representation of a user interaction flow sheet relating to a change panel request initiated by a browser in association with a framework of the present invention.
**Figure 6** is a schematic representation of a user interaction flow sheet relating to completion of an update of the user's data store in association with a framework of the present invention.

### Detailed Description of the Preferred Embodiment

To better understand the elements of the present invention, a comparison will be provided of one example of a prior art model of a web-based interactive commercial site. In Figure 1, a client machine X is shown in communication with a user server across an internet zone. Figure 1 illustrates an example in which the client has returned associated pages A and B from the user website. The web pages are returned separately. It can be seen that in step 1 associated with page A, the client submits client identification (ID) to the user server. In step 2, the client receives page A from the server along with associated user data for page A, and the user data associated with page B. The client enters the required information and returns user data for page A in step 3. Typically, the client's ID information is provided along with the updated information to ensure that the updated information is used to update the client's information stored in the user's data source. Figure 1 also illustrates that a separate series of corresponding steps 1, 2, and 3 are repeated to return and then update the user data stored for client X in connection with associated page B. The broken line is shown to represent the submission of the request to have the server process the user data when he/she is finished updating the pages.

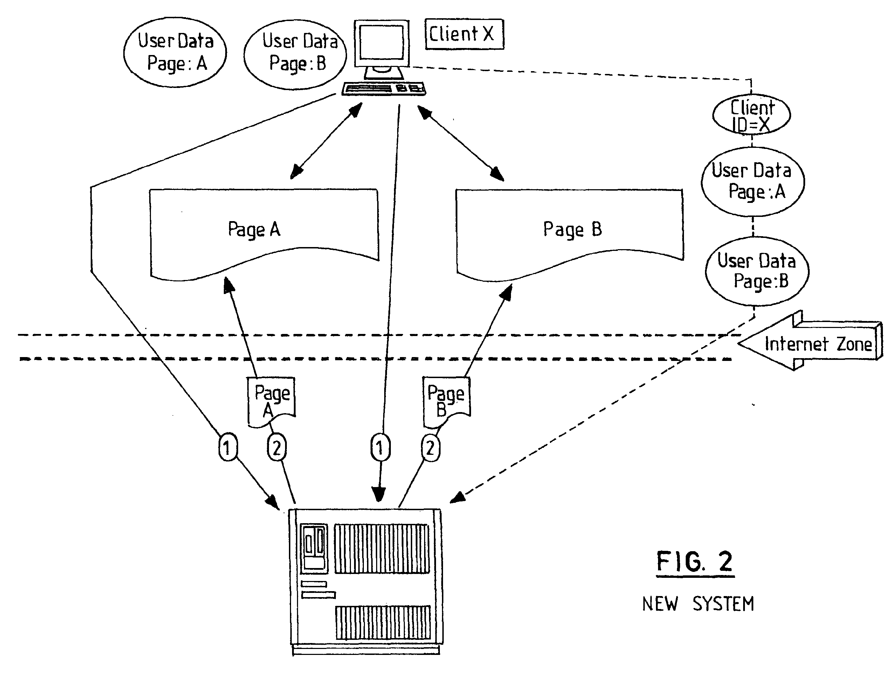

Figure 2 depicts a schematic representation in simplified form of a preferred embodiment of the invention, namely a framework implemented in a web browser environment. The web browser is depicted accessing a user server from a client machine located at a remote location. In this instance, the client X, at its machine, requests pages A and B from the user's remote data source, through the user server.

The client X stores the user data for associated pages A and B on its client machine X. When desired, the client X returns pages A and B through requests identified with lines 1. Pages A and B are returned from the remote user server to the client's machine. The client X is then enabled through the framework (implemented within the web browser) to update the client information at its machine, using the user data stored at its machine, to then update the user data for pages A and B. Once the client is satisfied that it has successfully completed updating the user data for those associated pages, the client submits the user data for those pages across the internet zone to the user's server, along with client ID (identification) information for processing One of the important aspects of the present invention is that it provides for the bundling of many separately served pages into one viewable page that can be invoked from a single URL (Universal Resource Locator) request. The framework allows multiple pages to be packaged into one viewable page, with tabs provided for the user to navigate the many pages.

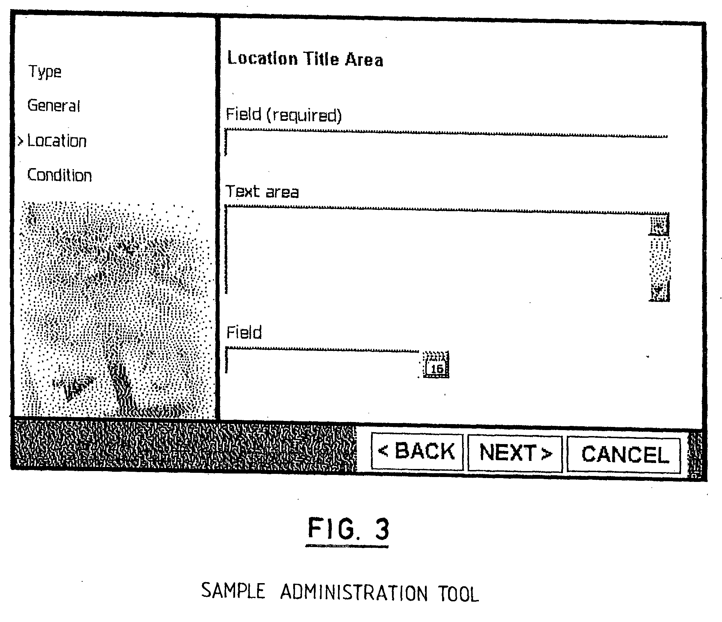

An embodiment of the invention is described in association with a tool as shown in Figure 3. Figure 3 is an example of a screen capture of what a user may see of the tool. Once the user has completed the modification of the information in the forms of each page, the framework provides a mechanism to package these forms and submit the data contained in the pages to the server for processing.

The framework may be created using an XML (Extensive Markup Language) file to define the pages which are to be bundled into one viewable page. By way of example, each viewable page may be created dynamically using Java Server Pages with standard HTML and JavaScript technologies. However, it is to be understood that other technologies may be used to supplement or replace these suggested technologies.

By implementing this method of page bundling, the framework is able to create an application-like interface within a browser environment using the standard technologies of, for example, HTML and JavaScript. This approach removes the problem of requiring the user to install any applications, and removes the performance problem of downloading large applets.

The framework provides a clear separation between the viewable pages and the framework itself by defining all viewable pages within an XML file. Content owners may then create viewable pages without any detailed knowledge of the framework needed to provide these features. Consequently, the content owners are given the opportunity to easily create pages using their favorite creation tool with very little technical training or experience. A framework administrator may create a single viewable page containing tabs for each page provided by the content owners, simply by defining these pages within the XML file.

The framework automatically handles the three necessary functions of the tool:
Page initialization;
User interaction; and
Form submission.

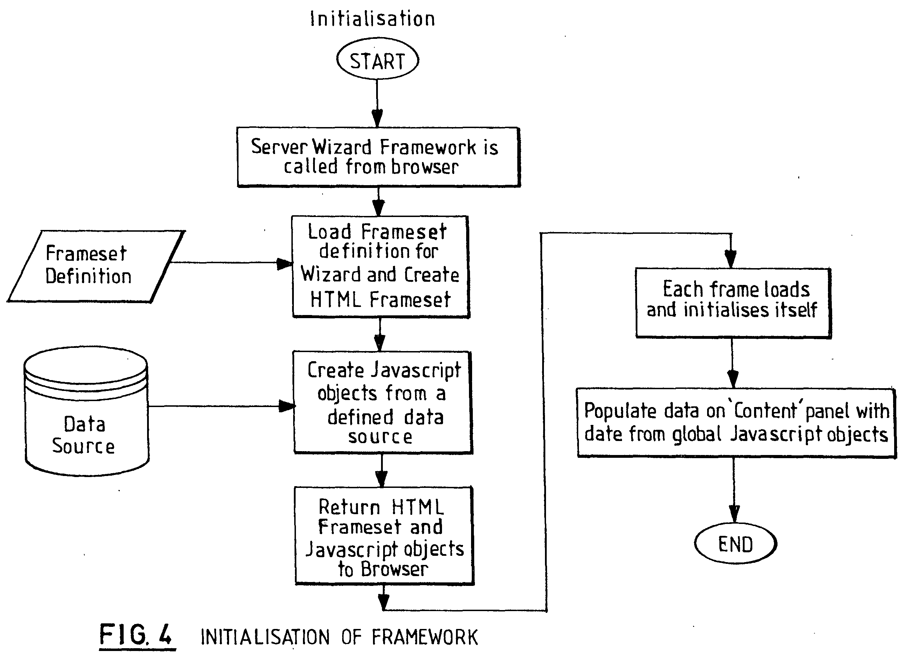

Figure 4 shows an example of the initialization flow. This figure illustrates how the framework initializes and returns back to the browser a GUI (graphical user interface) such as the sample administration tool shown in Figure 3. The user asks to display the provided tool by calling a single URL. The framework then loads an XML file that describes the requested tool, and creates a frameset that packages all of the viewable pages defined within the XML file. Any data needed by any of the viewable pages is loaded from a data source and stored, by way of example, within JavaScript variables such that they are accessible on the client machine. In this example, the HTML frameset and the JavaScript Objects are returned to the browser. Each frame loads and initializes itself. Data on a content panel is populated with data from the global JavaScript objects, completing the initialization step.

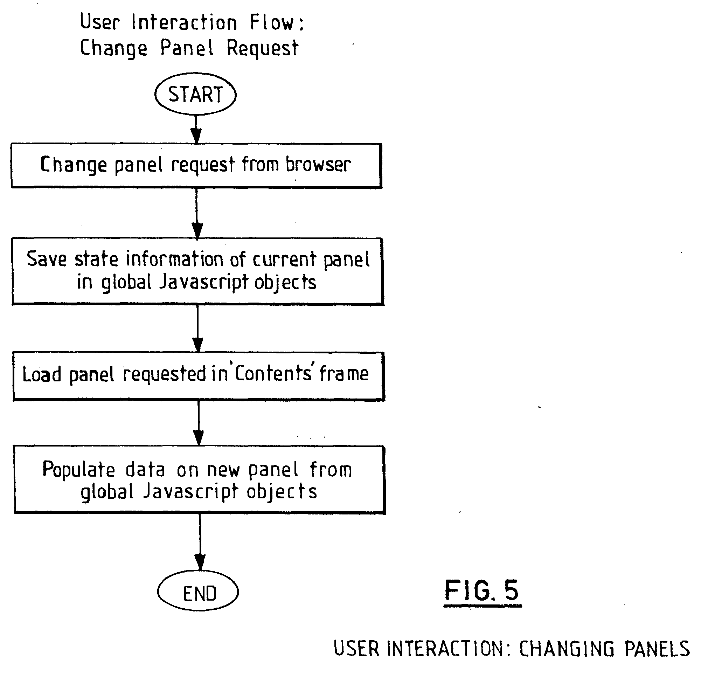

By way of further example, the user interaction flow for a change panel request is described in Figure 5. The framework provides links for the user to click to navigate through the tool. By way of example, the 'back' and 'next' buttons are examples of the kinds of links that may be provided to the user. When the user clicks on one of the provided links, the framework performs the processing necessary to navigate to the next viewable page. In the example illustrated in Figure 3, there are 4 panels, 'Type', 'General', 'Location', and 'Conditions'. The user can administer a different part of the data source from each panel. To switch between the panels provided in the example, the user may click on the 'back' and 'next' buttons and the user interaction flow is executed.

With reference to the specific example illustrated in Figure 5, the change panel request is called from the browser. Upon receiving the change panel request from the browser, the state information of the current panel is saved in global JavaScript objects. Thereafter, the requested panel is loaded in a 'contents' frame and the new panel is populated with data from the global JavaScript objects.

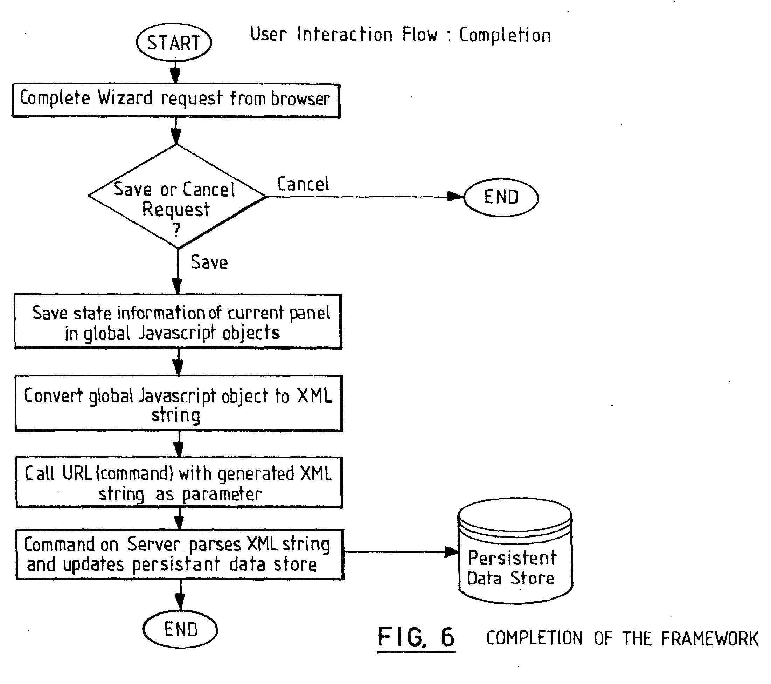

In Figure 6, the user interaction flow is depicted for form submission of the previously illustrated example of the tool. In short, the diagram illustrates how the information entered by the administrator inside the tools pages is sent back to the server and stored on the data source.

A 'complete' request is made from the browser when the administrator has completed entering his/her state information. The administrator is provided with a choice to either save or cancel the saving of state information for the current panel. If the administrator cancels the request, the state information is not saved for the current panel. However, if a decision is entered to save the 'state information' for the current panel, the state information is saved in global JavaScript objects. The global JavaScript objects are in turn converted to an XML string.

A call is performed for a URL (command) with a generated XML string as a parameter. A command on the server parses the XML string and updates the persistent data store. Once the persistent data store is updated, the framework is completed.

## Claims

1. An application framework for use in a web browser environment, the web browser environment comprising associated web pages in a data source accessible from a remote location, the framework comprising:
means for bundling the associated web pages into one viewable page;
means for navigating the associated web pages within the viewable page;
means for loading from the data source any data required by the associated web pages;
means for enabling access to the viewable page from the remote location; and
means for enabling the data required by the associated web pages to be stored at the remote location.

2. The application framework claimed in claim 1 comprising:
means to enable changes to the data required by the associated web pages at the remote location, and
means to enable the changes to the data to be stored at the data source.

3. The application framework as claimed in claim 2, comprising means for loading a frameset definition, means for creating a frameset compatible with the frameset definition, and means for creating parsable objects from the data required by the data source.

4. The application framework as claimed in claim 3, wherein the means for navigating the associated web pages within the viewable page comprise a graphical user interface.

5. The application framework as claimed in claim 4, wherein the means for navigating the associated web pages within the viewable page are provided through the web browser.

6. The application framework as claimed in claim 4, wherein the means for enabling access to the viewable page from the remote location and the means for enabling the data required by the associated web pages to be stored at the remote location are provided through the web browser to the remote location.

7. The application framework as claimed in claim 6, wherein the means for enabling changes to the data required by the associated web pages at the remote location are provided through the web browser to the remote location.

8. The application framework as claimed in claim 2 wherein the data source is distributed between two or more locations, and the associated web pages are accessible from the data source through a single URL request.

9. A method of providing an application framework for use in a web browser environment, the web browser environment comprising associated web pages in a data source accessible from a machine at a remote location, the method comprising:
bundling the associated web pages into a single viewable page, the single viewable page being accessible through a single URL request,
providing means for navigation of each of the associated web pages,
identifying data required by each of the associated web pages in a parsable string,
enabling the machine at the remote location to store the parsable string, and modify the data required by each of the web pages in the parsable string, and
storing in the data source modified data received from the machine at the remote location.

10. The method of claim 9 wherein the means for navigation comprise a graphical user interface comprising tabs for manipulation of each of the associated web pages.

11. The method of claim 9 comprising: providing a frameset definition, providing a frameset compatible with the frameset definition, and providing parsable objects from the data required by the data source.

12. The method as claimed in claim 9, comprising, providing to the remote location, through the web browser, means for enabling the data required by each of the associated web pages.

13. The method as claimed in claim 12, wherein the data source is distributed between two or more locations.

14. A computer program comprising instructions, which, when executed in a data processing system, cause said system to carry out the steps of a method of providing an application framework as claimed in any one of claims 9 to 13.
